# FASCICULE DE BREVET EUROPEEN

(11) **EP 0 929 388 B1**
(45) Date de publication et mention de la délivrance du brevet: **20.11.2002**
(21) Numéro de dépôt: 98941490.9
(22) Date de dépôt: 30.07.1998
(51) Int. Cl.: B29B 7/84

(54) **MELANGEUR EN CONTINU DE CAOUTCHOUC**
DURCHLAUFMISCHER FÜR KAUTSCHUK
CONTINUOUS RUBBER KNEADER

(30) Priorité: 01.08.1997 FR 9701444
(43) Date de publication de la demande: 21.07.1999
(73) Titulaire: SEDEPRO, F-75015 Paris (FR)
(72) Inventeur: DEAL, Michel, F-03110 Saint Rémy-en-Rollat (FR); VAN MEYEL, Christian, F-63200 Saint-Bonnet-Près-Riom (FR)
(74) Mandataire: Dequire, Philippe Jean-Marie Denis
(86) Numéro de dépôt international: FR9801689
(87) Numéro de publication internationale: WO99006198

(56) Documents cités:
- GB-A- 1 431 978
- US-A- 5 332 309

## Description

La présente invention concerne le mélangeage des caoutchoucs. Plus particulièrement, elle se rapporte à la préparation en continu de compositions de caoutchouc contenant de la silice comme agent de renforcement.

Le brevet EP 0 605 781 divulgue un appareil de mélangeage en continu pour préparer une composition de caoutchouc. Cet appareil possède une chambre de mélangeage allongée comportant au moins un rotor en rotation dans un stator, une extrémité amont et une extrémité aval, entre lesquelles la matière chemine progressivement, un ou plusieurs orifices d'introduction, au travers desquels ladite chambre de mélangeage reçoit lesdits constituants de la composition de caoutchouc et un orifice de sortie situé à l'extrémité aval, au travers duquel est expulsée la composition de caoutchouc. Cet appareil de mélangeage en continu a notamment l'avantage de permettre l'obtention de compositions de caoutchouc dans lesquelles l'agent de renforcement - e. g. noir de carbone - est remarquablement bien dispersé.

Le brevet EP 0 501 227 a montré que des compositions de caoutchouc comportant dans des proportions très importantes de la silice comme agent de renforcement pouvaient avoir des propriétés remarquables pour une utilisation comme bande de roulement de pneumatiques à condition notamment que la silice ait une excellente dispersion dans la matrice élastomérique.

On a donc cherché à utiliser un mélangeur en continu tel que présenté dans la demande de brevet EP 0 605 781-A1 pour mettre en oeuvre des compositions de caoutchouc contenant de la silice comme agent de renforcement.

Or, la demanderesse a constaté que contrairement à ses attentes, l'utilisation d'un tel mélangeur en continu ne permettait pas, dans tous les cas, d'obtenir des compositions satisfaisantes de caoutchouc, notamment lorsque ces compositions contiennent de la silice comme agent de renforcement. En particulier, on a parfois observé des instabilités de débit de la matière dans le mélangeur. De plus, les propriétés de ces compositions se sont révélées être différentes de celles obtenues avec des procédés connus de mélangeage en «batch» : dureté plus élevée, temps de grillage (temps nécessaire, à une température donnée, pour que la réaction de vulcanisation démarre dans un échantillon de la composition de caoutchouc, à l'issue du mélangeage) réduit, par exemple.

L'invention a pour objet un procédé et un appareil de mélangeage en continu qui permettent d'atteindre de meilleurs résultats, notamment lorsque l'on prépare des compositions de caoutchouc contenant de la silice.

Dans ce qui suit, lorsque le volume de la chambre de mélangeage dans une zone donnée est totalement occupé par les constituants à mélanger, on dit par convention que le taux de remplissage de cette zone est égal à 1. En revanche, lorsque le volume de la zone considéré de la chambre de mélangeage n'est pas totalement occupé par les constituants à mélanger, on dit alors que le taux de remplissage est inférieur à 1.

Le procédé de mélangeage en continu, selon l'invention, pour préparer une composition de caoutchouc dans une chambre de mélangeage allongée définie par le volume compris entre la surface radialement intérieure d'un stator et la surface radialement extérieure d'au moins un rotor en rotation dans ledit stator, consiste à :
- introduire en continu dans la chambre de mélangeage, et en un ou plusieurs points d'introduction, divers constituants parmi lesquels au moins un élastomère de base et au moins une charge renforçante, lesdits constituants étant tels que leur mélangeage est susceptible de provoquer à l'intérieur de la chambre de mélangeage l'apparition d'au moins un produit en phase gazeuse,
- faire cheminer les différents constituants depuis leur point d'introduction vers un orifice de sortie de la chambre de mélangeage, et
- faire circuler, dans au moins une partie de la chambre de mélangeage, un courant d'un gaz destiné à entraîner ladite phase gazeuse hors de ladite chambre de mélangeage.

La circulation de ce gaz a pour but de permettre l'extraction, hors de la chambre de mélangeage, des produits en phase gazeuse susceptibles d'apparaître dans la chambre lors du mélangeage. Ce procédé permet d'obtenir, notamment pour des compositions de caoutchouc comportant de la silice comme agent de renforcement, des propriétés satisfaisantes. La zone dans laquelle on fait circuler ce courant de gaz, la « zone de circulation », est plus particulièrement une zone où le taux de remplissage desdits constituants est inférieur à un. De préférence, on fait circuler ce courant de gaz en sens inverse du sens de cheminement des matières en cours de mélangeage.

La circulation de ce gaz permet aussi de mieux maîtriser l'évolution thermique de la composition de caoutchouc.

L'invention a aussi pour objet un appareil de mélangeage en continu pour préparer une composition de caoutchouc qui possède une chambre de mélangeage allongée comportant :
- au moins un rotor en rotation dans un stator ;
- une extrémité amont et une extrémité aval, entre lesquelles la matière chemine progressivement ;
- un ou plusieurs orifices d'introduction de matière, au travers desquels ladite chambre de mélangeage reçoit lesdits constituants de la composition de caoutchouc ;
- un orifice de sortie situé à l'extrémité aval, au travers duquel est expulsée la composition de caoutchouc ; et
- des moyens pour faire circuler un gaz dans au moins une partie de ladite chambre appelée zone de circulation.

Cette chambre de mélangeage est caractérisée en ce que, dans la zone de circulation, le stator et/ou le rotor comportent une gorge.

De préférence, le stator et/ou le rotor ayant au moins, dans la zone de circulation, un filet continu, la gorge est accolée à la face arrière de ce filet continu. La gorge peut avoir une forme de U, ou de V incliné. Cette gorge a l'avantage de régulariser la circulation du gaz ainsi que la stabilité du débit de cheminement de la matière dans la chambre de mélangeage.

De préférence, les moyens pour faire circuler le gaz dans la zone de circulation font circuler ce gaz à contre-courant du sens de cheminement de la matière dans la chambre de mélangeage. Cette circulation à contre-courant augmente la vitesse relative du gaz relativement à la matière et favorise une bonne extraction des produits en phase gazeuse.

Avantageusement, la zone de circulation est située en aval du ou des orifices d'introduction des constituants dans la chambre de mélangeage, cela permet de perturber le moins possible l'incorporation de ces constituants dans la matrice élastomérique de la composition.

Pour obtenir l'étanchéité de la zone de circulation et favoriser une circulation stable du gaz, en amont et en aval de cette zone, la forme de la surface du rotor et/ou du stator est telle que, en amont et en aval, on trouve une zone dont le taux de remplissage est égal à 1.

Cela a l'avantage de limiter strictement la circulation du gaz à cette zone de circulation sans perturbation du mélangeage en amont.

Les caractéristiques et avantages de l'invention seront mieux compris à l'aide de la description qui suit et qui se réfère au dessin, illustrant à titre non limitatif un exemple d'exécution, et sur lequel :
- la figure 1 est une vue en élévation d'un appareil de mélangeage selon l'invention, comportant des écorchés ;
- la figure 2 est une vue de côté d'une partie du rotor dans la zone de circulation ; et
- la figure 3 est une vue en coupe partielle axiale d'une variante d'une partie de rotor dans la zone de circulation.

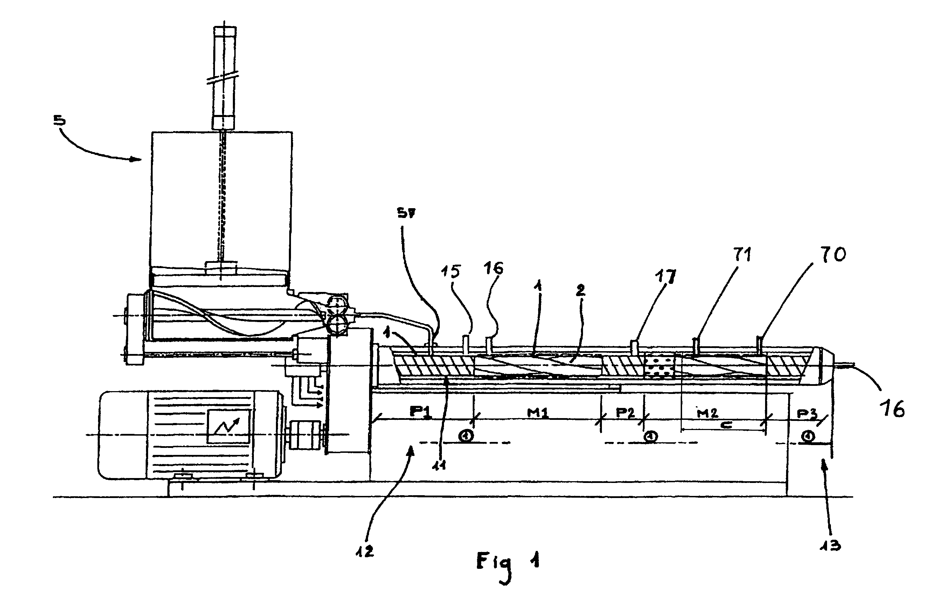

L'appareil de mélangeage en continu présenté à la figure 1 correspond substantiellement à celui décrit dans la demande de brevet EP 0 605 781-A1.

Cet appareil comporte une chambre 11 de mélangeage à l'intérieur de laquelle tourne un rotor 2. Le côté amont de la chambre de mélangeage est repéré par la référence 12 et le côté aval par la référence 13.

Du côté amont de la chambre de mélangeage se trouvent les éléments 5 d'introduction des élastomères de base constituant du mélange de caoutchouc. Les élastomères sont introduits dans la chambre de mélangeage par la canalisation 57.

L'écorché de la figure 1 permet d'apercevoir l'intérieur de la chambre de mélangeage 11. Celle-ci est constituée par le volume disponible entre le rotor 2 et le stator 1.

Le long du rotor 2, on distingue trois zones dont l'action est essentiellement la propulsion des constituants du mélange (zones P), entre lesquelles on aperçoit deux zones distinctes dont l'action est essentiellement le mélangeage (zones M).

La forme précise du rotor et du stator (nombre, pas et angles des filets ou autres formes) dans les différentes zones permet, notamment de régler le taux de remplissage à 1 ou inférieur à 1 dans les différentes zones de la chambre de mélangeage. L'optimisation de ces formes est assez empirique et fait intervenir beaucoup d'essais expérimentaux. A la figure 1 sont indiqués les zones où le taux de remplissage peut valoir 1 (voir 1 entouré d'un cercle).

L'introduction des élastomères de base se fait du côté amont 12 de la chambre de mélangeage dans la zone de propulsion P1.

Dans cette zone de propulsion P1, en amont de la première zone M1, sont aussi introduits les constituants pulvérulents tels les charges de renforcement, silice et/ou noir de carbone par l'orifice d'introduction 15.

Les constituants liquides tels les huiles d'extension et éventuellement les agents de liaison silice/élastomère (silanes) sont de préférence introduits au début de la première zone M1 par l'orifice d'introduction 16.

Les autres constituants de la composition de caoutchouc tels les antioxydants, les plastifiants, le soufre, les activateurs sont prémélangés, par exemple dans une cuve avec un agitateur, pour obtenir une pâte. La pâte est introduite dans une seconde zone propulsive P2 disposée entre les deux zones de mélangeage M1 et M2 à travers l'orifice 17.

Comme décrit dans la demande citée, les divers constituants sont introduits, de préférence, au moyen de pompes volumétriques.

La seconde zone de mélangeage M2, comporte un orifice d'amenée 70 de gaz et un orifice d'extraction 71 de ce gaz qui définissent la zone C de circulation du gaz. L'orifice d'amenée est de préférence situé du côté aval de la zone M2 de telle sorte que la circulation du gaz s'effectue à contre-courant du sens de cheminement de la matière dans la chambre de mélangeage 11.

Le gaz utilisé est usuellement de l'air.

Avantageusement, dans la zone de circulation C, le taux de remplissage est inférieur à 1. Il semble que cela contribue à permettre une circulation stable, régulière et sans à coups de l'air. Ce taux de remplissage inférieur à 1 est obtenu, comme décrit dans la demande EP 0 605 781-A1 par essais expérimentaux en faisant varier la forme du rotor et/ou du stator dans cette zone, en faisant varier le volume de la chambre, en faisant varier la température imposée aux parois du stator, etc.

De plus, pour obtenir une bonne étanchéité de cette zone, celle-ci est située entre deux zones de propulsion P2 et P3 telles qu'elles entraînent en aval de chacune d'elle, comme indiqué à la figure 1, la constitution de zones de taux de remplissage égal à 1, qui encadrent la zone C où l'air circule.

La circulation d'air dans la zone de circulation C peut être obtenue soit en aspirant l'ensemble des gaz présent dans la chambre de mélangeage par l'orifice d'extraction 71, soit en injectant l'air sous pression à travers l'orifice d'amenée 70 en mettant cet orifice d'amenée en liaison avec une source d'air comprimé par l'intermédiaire d'un détendeur. Cette dernière solution est plus souple d'utilisation et est donc préférable.

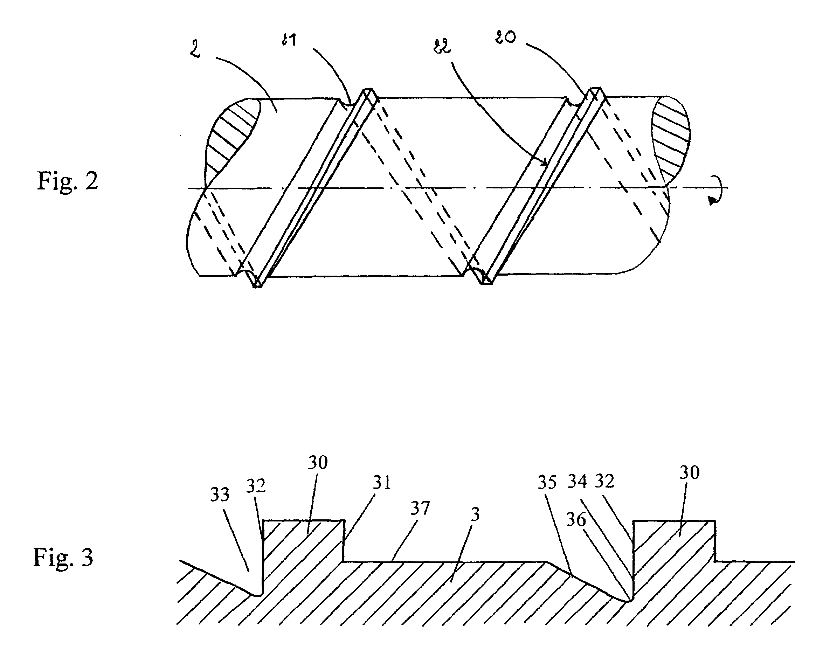

La figure 2 montre une variante de réalisation de l'appareil de mélangeage selon l'invention qui comporte une portion de rotor 2 dont la surface présente une gorge 21 permettant d'aider à créer un canal interne par lequel le courant gazeux peut circuler. A la figure 2, on voit un filet 20 continu comportant, du côté de sa face arrière 22, compte tenu du sens de rotation indiqué sur la figure du rotor 2, une telle gorge 21. La gorge 21 est en forme de U. La branche du U la plus proche du filet 20 prolonge radialement intérieurement la face arrière 22 du filet 20. L'autre branche du U est légèrement divergente. La surface de la section droite de la gorge 21 est du même ordre de grandeur que la surface de la section droite de la saillie due au filet 20.

Pour obtenir une bonne stabilité du courant d'air, il est préférable que cette gorge 21 s'étende sur pratiquement l'ensemble de la zone de circulation. Une telle gorge a l'avantage d'améliorer la stabilité du cheminement de la composition de caoutchouc dans la chambre de mélangeage.

La figure 3 montre une autre variante de réalisation d'une gorge 33. La portion de rotor 3 comporte un filet 30 avec une face avant 31 et une face arrière 32. La gorge 33 est accolée à la face arrière 32 du filet 30. Cette gorge 33 est en forme de V incliné. Elle comporte une première paroi 34 qui prolonge radialement intérieurement la face arriére 32 du filet 30 et une seconde paroi 35 qui relie le fond 36 du V à la surface 37 du rotor 3. L'angle entre les deux parois du V est compris entre 50 et 80 degrés. Le fond 36 du V a un petit rayon de courbure. La forte divergence des deux parois du V facilite l'évacuation de toute particule de la composition de caoutchouc qui pénétrerait dans la gorge 33. D'autre part, le faible rayon de courbure du fond 36 du V rend difficile un colmatage de la gorge 33.

Lors du démarrage de l'appareil de mélangeage, on peut choisir d'attendre, pour mettre en fonctionnement la circulation d'air dans la zone C, que la chambre de mélangeage soit remplie de matière et que l'extrusion de la composition de caoutchouc ait débuté à travers l'orifice 16. Ainsi, la zone de circulation dans la chambre de mélangeage est relativement étanche.

Le débit et la pression d'admission d'air sont réglés expérimentalement pour obtenir une bonne extraction des produits en phase gazeuse liés aux constituants de la composition de caoutchouc et/ou à leur mélangeage.

Des essais ont été réalisés avec une composition caoutchoutique renforcée à la silice correspondant à la formulation repérée I dans le tableau 1 de la demande de brevet EP 0 501 227-A1,

La confection d'un tel mélange dans le mélangeur en continu sans circulation d'air entraîne notamment une augmentation de cinq points de la dureté shore A et une diminution de plus de 50 % du temps de grillage par rapport au procédé batch classique. En revanche, avec une circulation d'air, on constate que l'on retrouve des propriétés des mélanges correspondant à celles obtenues avec un procédé batch classique. On observe aussi une amélioration de la régularité du débit de la matière ainsi que des propriétés des compositions de caoutchouc.

Ces résultats montrent que selon le procédé proposé par l'invention, mettre en place une circulation d'air dans la chambre de mélangeage doit permettre d'extraire des constituants volatils, et notamment de l'eau, présents dans la silice ou libérés par les réactions visant à lier la silice avec les élastomères en cours de mélangeage.

La demanderesse a également constaté que ce procédé est aussi efficace pour extraire en tout ou partie des constituants volatils (eau) présents dans d'autres constituants des compositions de caoutchouc, les élastomères ou les noirs de carbone par exemple.

## Revendications

1. Appareil de mélangeage en continu pour préparer une composition de caoutchouc, possédant une chambre de mélangeage (11) allongée comportant :
- au moins un rotor (2) en rotation dans un stator (1) ;
- une extrémité amont (12) et une extrémité aval (13), entre lesquelles la matière chemine progressivement ;
- un ou plusieurs orifices d'introduction de matière (15, 16, 17, 57), au travers desquels ladite chambre de mélangeage (11) reçoit lesdits constituants de la composition de caoutchouc ;
- un orifice de sortie (16) situé à l'extrémité aval (13), au travers duquel est expulsée la composition de caoutchouc ; et
- des moyens (70, 71, 21, 33) pour faire circuler un gaz dans au moins une partie de ladite chambre appelée zone de circulation ;
**caractérisé en ce que**, dans ladite zone de circulation, le stator et/ou le rotor comportent une gorge (21).

2. Appareil selon la revendication 1, dans lequel le stator et/ou le rotor ayant au moins, dans la zone de circulation, un filet (20) continu, ladite gorge (21, 33) est accolée à la face arrière (22) dudit filet (20) continu.

3. Appareil selon l'une des revendications 1 ou 2, dans lequel ladite gorge (21) est en forme de U.

4. Appareil selon l'une des revendications 1 ou 2, dans lequel ladite gorge (33) est en forme de V incliné.

5. Appareil selon la revendication 4, dans lequel les deux branches du V font entre elles un angle compris entre 50 et 80 degrés.

6. Appareil selon l'une des revendications 1 à 5, dans lequel lesdits moyens (70, 71, 21, 33) pour faire circuler un gaz font circuler ledit gaz à contre-courant du sens de cheminement de la matière dans la chambre de mélangeage.

7. Appareil selon l'une des revendications 1 à 6, dans lequel la zone de circulation est située en aval du ou des orifices d'introduction de matière (15, 16, 17, 57).

8. Appareil selon l'une des revendications 1 à 7, dans lequel, en amont et en aval de 1a zone de circulation, la forme de la surface du rotor et/ou du stator est telle que, en amont et en aval de ladite zone de circulation, on trouve une zone dont le taux de remplissage est égal à 1.

9. Appareil selon l'une des revendications 1 à 8, dans lequel les moyens (70, 71, 21, 33) pour faire circuler ledit gaz comportent au moins un orifice d'amenée (70), situé à une extrémité de la zone de circulation, et au moins un orifice d'extraction (71), situé à l'autre extrémité de ladite zone de circulation.

10. Appareil selon la revendication 9, dans lequel les moyens (70, 71, 21, 33) pour faire circuler ledit gaz comportent des moyens pour injecter ledit gaz sous pression dans ladite chambre à travers au moins ledit orifice d'amenée (70).

11. Appareil selon la revendication 10, dans lequel les moyens (70, 71, 21, 33) pour faire circuler ledit gaz comportent des moyens pour aspirer le gaz hors de ladite chambre à travers au moins ledit orifice d'extraction (70).

12. Appareil selon l'une des revendications 1 à 11, dans lequel la chambre de mélangeage comporte un seul rotor (2).

13. Procédé de mélangeage en continu pour préparer une composition de caoutchouc dans une chambre de mélangeage (11) allongée définie par le volume compris entre la surface radialement intérieure d'un stator (1) et la surface radialement extérieure d'au moins un rotor (2) en rotation dans ledit stator (1), consistant à :
- introduire en continu dans la chambre de mélangeage (11), et en un ou plusieurs points d'introduction (15, 16, 17, 57), divers constituants parmi lesquels au moins un élastomère de base et au moins une charge renforçante, lesdits constituants étant tels que leur mélangeage est susceptible de provoquer à l'intérieur de la chambre de mélangeage (11) l'apparition d'au moins un produit en phase gazeuse,
- faire cheminer les différents constituants depuis leur point d'introduction (15, 16, 17, 57) vers un orifice de sortie (16) de la chambre de mélangeage (11), et
- faire circuler, dans au moins une partie de la chambre de mélangeage (11) un courant d'un gaz destiné à entraîner ladite phase gazeuse hors de ladite chambre de mélangeage.

14. Procédé selon la revendication 13, dans lequel on fait circuler ledit courant de gaz à contre-courant du sens de cheminement des matières dans la chambre de mélangeage (11).

15. Procédé selon l'une des revendications 13 ou 14, dans lequel on fait circuler ledit courant de gaz dans une zone (C) de ladite chambre de mélangeage (11) où le taux de remplissage de la chambre par lesdits constituants est inférieur à un.

16. Procédé selon l'une des revendications 13 à 15, dans lequel ledit gaz est de l'air.

17. Procédé selon l'une des revendications 13 à 16, dans lequel au moins une partie dudit agent de renforcement est de la silice.

## Patentansprüche

1. Durchlaufmischer zur Erzeugung einer Kautschukzusammensetzung, der eine längliche Mischkammer (11) besitzt, die aufweist:
- mindestens einen in einem Stator (1) drehenden Rotor (2);
- ein stromaufwärts liegendes (12) und ein stromabwärts liegendes Ende (13), zwischen denen das Material progressiv wandert;
- eine oder mehrere Material-Einführöffnungen (15, 16, 17, 57), durch die hindurch die Mischkammer (11) die Bestandteile der Kautschukzusammensetzung erhält;
- eine Austrittsöffnung (16) am stromabwärts liegenden Ende (13), durch die die Kautschukzusammensetzung ausgestoßen wird; und
- Mittel (70, 71, 21, 33), um ein Gas in mindestens einem Teil der Kammer, Strömungszone genannt, strömen zu lassen,
**dadurch gekennzeichnet, daß** der Stator und/oder der Rotor in der Strömungszone eine Kehle (21) aufweisen.

2. Mischer nach Anspruch 1, bei dem, da der Stator und/oder der Rotor in der Strömungszone mindestens einen durchlaufenden Gewindegang (20) haben, die Kehle (21, 33) an die Rückseite (22) dieses Gewindegangs (20) angesetzt ist.

3. Mischer nach einem der Ansprüche 1 oder 2, bei dem die Kehle (21) U-förmig ist.

4. Mischer nach einem der Ansprüche 1 oder 2, bei dem die Kehle (33) die Form eines schrägen V hat.

5. Mischer nach Anspruch 4, bei dem die beiden Schenkel des V zwischen sich einen Winkel bilden, der zwischen 50 und 80 Grad liegt.

6. Mischer nach einem der Ansprüche 1 bis 5, bei dem die Mittel (70, 71, 21, 33), um ein Gas strömen zu lassen, dieses Gas im Gegenstrom zur Wanderrichtung des Materials in der Mischkammer strömen lassen.

7. Mischer nach einem der Ansprüche 1 bis 6, bei dem die Strömungszone sich stromabwärts hinter der Öffnung oder den Öffnungen zur Einführung von Material (15, 16, 17, 57) befindet.

8. Mischer nach einem der Ansprüche 1 bis 7, bei dem stromaufwärts vor und stromabwärts hinter der Strömungszone die Form der Oberfläche des Rotors und/oder des Stators derart ist, daß man vor und hinter der Strömungszone eine Zone findet, deren Füllgrad gleich 1 ist.

9. Mischer nach einem der Ansprüche 1 bis 8, bei dem die Mittel (70, 71, 21, 33), um das Gas strömen zu lassen, mindestens eine Zufuhröffnung (70), die sich an einem Ende der Strömungszone befindet, und mindestens eine Abzugsöffnung (71) aufweisen, die sich am anderen Ende der Strömungszone befindet.

10. Mischer nach Anspruch 9, bei dem die Mittel (70, 71, 21, 33), um das Gas strömen zu lassen, Mittel aufweisen, um das Druckgas durch mindestens die Zufuhröffnung (70) in die Kammer einzublasen.

11. Mischer nach Anspruch 10, bei dem die Mittel (70, 71, 21, 33), um das Gas strömen zu lassen, Mittel aufweisen, um das Gas durch mindestens die Abzugsöffnung (71) aus der Kammer abzusaugen.

12. Mischer nach einem der Ansprüche 1 bis 11, bei dem die Mischkammer nur einen Rotor (2) aufweist.

13. Durchlaufmischverfahren zur Erzeugung einer Kautschukzusammensetzung in einer länglichen Mischkammer (11), die von dem Volumen zwischen der radial inneren Fläche eines Stators (1) und der radial äußeren Fläche mindestens eines im Stator (1) drehenden Rotors (2) definiert wird, das darin besteht:
- in die Mischkammer (11), und an einem oder mehreren Einführpunkten (15, 16, 17, 57), verschiedene Bestandteile durchlaufend einzuführen, unter ihnen mindestens ein Basiselastomer und mindestens ein Verstärkungsfüllstoff, wobei die Bestandteile so sind, daß ihre Mischung innerhalb der Mischkammer (11) das Auftreten mindestens eines Produkts in Gasphase bewirken kann,
- die verschiedenen Bestandteile von ihrem Einführungspunkt (15, 16, 17, 57) zu einer Austrittsöffnung (16) der Mischkammer (11) wandern zu lassen, und
- in mindestens einem Teil der Mischkammer (11) einen Gasstrom strömen zu lassen, der die Gasphase aus der Mischkammer hinaus mitreißen soll.

14. Verfahren nach Anspruch 13, bei dem man den Gasstrom im Gegenstrom zur Wanderrichtung der Materialien in der Mischkammer (11) strömen läßt.

15. Verfahren nach einem der Ansprüche 13 oder 14, bei dem man den Gasstrom in einer Zone (C) der Mischkammer (11) strömen läßt, in der der Füllgrad der Mischkammer durch die Bestandteile unter Eins liegt.

16. Verfahren nach einem der Ansprüche 13 bis 15, bei dem das Gas Luft ist.

17. Verfahren nach einem der Ansprüche 13 bis 16, bei dem mindestens ein Teil des Verstärkungsmittels Siliciumdioxid ist.

## Claims

1. A continuous mixing apparatus for preparing a rubber composition, which has an elongated mixing chamber (11) comprising:
- at least one rotor (2) rotating in a stator (1);
- an upstream end (12) and a downstream end (13), between which the material gradually travels;
- one or more material introduction orifices (15, 16, 17, 57), through which said mixing chamber (11) receives said constituents of the rubber composition;
- an outlet orifice (16) located at the downstream end (13), through which the rubber composition is expelled; and
- means (70, 71, 21, 33) for circulating a gas in at least part of said chamber, referred to as "circulation zone",
**characterised in that** the stator and/or the rotor comprise a groove (21) in said circulation zone.

2. An apparatus according to Claim 1, in which, the stator and/or the rotor having at least, in the circulation zone, a continuous thread (20), said groove (21, 33) is located next to the rear face (22) of said continuous thread (20).

3. An apparatus according to one of Claims 1 or 2, in which said groove (21) is U-shaped.

4. An apparatus according to one of Claims 1 or 2, in which said groove (33) is in the form of an inclined V.

5. An apparatus according to Claim 4, in which the two branches of the V form between them an angle of between 50 and 80 degrees.

6. An apparatus according to one of Claims 1 to 5, in which said means (70, 71, 21, 33) for circulating a gas circulate this gas in a counter-current flow to the direction of travel of the material in the mixing chamber.

7. An apparatus according to one of Claims 1 to 6, in which the circulation zone is located downstream of the material introduction orifice(s) (15, 16, 17, 57).

8. An apparatus according to one of Claims 1 to 7, in which, upstream and downstream of the circulation zone, the form of the surface of the rotor and/or stator is such that, upstream and downstream of said circulation zone, there is a zone, the degree of filling of which is equal to 1.

9. An apparatus according to one of Claims 1 to 8, in which the means (70, 71, 21, 33) for circulating said gas comprise at least one feed orifice (70), located at one end of the circulation zone, and at least one extraction orifice (71), located at the other end of said circulation zone.

10. An apparatus according to Claim 9, in which the means (70, 71, 21, 33) for circulating said gas comprise means for injecting said gas under pressure into said chamber via at least said feed orifice (70).

11. An apparatus according to Claim 10, in which the means (70, 71, 21, 33) for circulating said gas comprise means for exhausting said gas from said chamber via at least said feed orifice (70).

12. An apparatus according to one of Claims 1 to 11, in which the mixing chamber comprises a single rotor (2).

13. A continuous mixing process for preparing a rubber composition in an elongated mixing chamber (11) defined by the volume between the radially inner surface of a stator (1) and the radially outer surface of at least one rotor (2) rotating in said stator (1), consisting of:
- continuously introducing into the mixing chamber (11), and at one or more introduction points (15, 16, 17, 57), various constituents including at least one base elastomer and at least one reinforcing filler, said constituents being such that the mixing thereof is liable to cause the appearance of at least one product in gaseous phase within the mixing chamber (11),
- making the various constituents travel from their point of introduction (15, 16, 17, 57) towards an outlet orifice (16) of the mixing chamber (11), and
- making a current of a gas intended to entrain said gaseous phase out of said mixing chamber circulate in at least part of the mixing chamber (11).

14. A process according to Claim 13, in which said current of gas is circulated in a counter-current flow to the direction of travel of the material in the mixing chamber (11).

15. A process according to one of Claims 13 or 14, in which said current of gas is circulated in a zone (C) of said mixing chamber (11) where the degree of filling of the chamber with said constituents is less than one.

16. A process according to one of Claims 13 to 15, in which said gas is air.

17. A process according to one of Claims 13 to 16, in which at least one part of said reinforcing agent is silica.
